# EUROPÄISCHE PATENTANMELDUNG

(11) **EP 1 067 317 A2**
(43) Veröffentlichungstag der Anmeldung: **10.01.2001**
(21) Anmeldenummer: 00113964.1
(22) Anmeldetag: 01.07.2000
(51) Int. Cl.: F16H 61/02, F16H 59/48

(54) **Gangwahl für automatisierte Getriebe**

(30) Priorität: 08.07.1999 DE 19931785
(71) Anmelder: ZF FRIEDRICHSHAFEN Aktiengesellschaft, 88038 Friedrichshafen (DE)
(72) Erfinder: Döbele, Bernd, 88682 Salem (DE)

(57) **Zusammenfassung**

Im Rahmen des Verfahrens zur Gangwahl für Stufenwechselgetriebe eines Kraftfahrzeugs wird die Entscheidung über den Zielgang derart verschoben, dass sich Steigungs- oder Gefälleausmaß proportional zur Verzögerung bzw. Beschleunigung des Fahrzeugs zuordnen lassen.

## Beschreibung

Die Erfindung betrifft ein Verfahren zur Gangwahl für Stufenwechselgetriebe gemäß dem Oberbegriff des Anspruchs 1.

Bei bekannten, selbstständig schaltenden Stufenwechselgetrieben für Kraftfahrzeuge erfolgt die Wahl des Schaltzeitpunktes bzw. der Schaltdrehzahl in Abhängigkeit von Kriterien, die vor der Einleitung der Schaltung vorliegen, wie z. B. im Rahmen der EP 0 255 519 B1 offenbart. Zu diesen Kriterien gehören die Drehzahl, die Fahrzeugbeschleunigung sowie der Lastzustand.

Insbesondere in der Verknüpfung Lastzustand-Fahrzeugbeschleunigung liegen bei Übergangszuständen Fehlerquellen in Form falscher Interpretation der Fahrsituation vor.

Der vorliegenden Erfindung liegt die Aufgabe zugrunde, ausgehend von dem erwähnten Stand der Technik, ein Verfahren zur Gangwahl für Stufenwechselgetriebe anzugeben, welches eine möglichst optimale Gangzuordnung ermöglicht, ohne dass eine ungünstige Beeinflußung des zeitlichen Verlaufs der Schaltung verursacht wird.

Diese Aufgabe ist gemäß der Erfindung durch die Merkmale des Patentanspruchs 1 gelöst. Weitere Ausgestaltungen der Erfindung gehen aus den Unteransprüchen hervor.

Demnach wird vorgeschlagen, die Entscheidung über den Zielgang zu verschieben und zwar derart, dass sich Steigungs- oder Gefälleausmaß proportional zur Verzögerung bzw. Beschleunigung des Fahrzeugs zuordnen lassen.

Dies wird erfindungsgemäß dadurch erreicht, dass nach dem Ableiten des Schaltzeitpunktes und der Schaltrichtung aus dem Ist-Gang und der dem Lastgrad zugehörigen Beschleunigung als Zielgang "Neutral" vorgegeben wird.

Anschliessend wird die momentane Beschleunigung bzw. Verzögerung des nunmehr antriebskraftfreien Kraftfahrzeugs erfasst und für die Auswahl des Soll-Ganges berücksichtigt.

Dadurch wird eine Optimierung der Zielgangwahl erreicht, da die tatsächlich auf das Kraftfahrzeug wirkenden Kräfte für die Auswahl des Soll-Ganges berücksichtigt werden.

Dabei wird die Schaltzeit nicht verlängert, da jeder Gangwechsel ohnehin über "Neutral" führt. Folglich spielt der Zeitpunkt der Vorgabe des Soll-Gangs für den Zeitablauf keine Rolle.

Das erfindungsgemäße Verfahren kann auch als übergeordnetes Entscheidungskriterium bei Grenzwertüberschreitungen der Fahrzeugverzögerung im antriebsfreien Zustand zur Korrektur der Enstscheidung einer beliebigen Fahrstrategie eingesetzt werden.

Eine weitere Variante der Erfindung sieht vor, die Auswahl des Soll-Gangs ab einen Restwert der laufenden Lastrücknahme oder ab einem vorgegebenen Öffnungsgrad der Kupplung vorzunehmen.

Die Erfindung wird im folgenden anhand der beigefügten Zeichnung näher erläutert.

In dieser stellen dar:
- Fig. 1: ein Diagramm des Schaltvorgangs gemäß der Erfindung für eine Hochschaltung mit Steigung der Fahrbahn und
- Fig. 2: ein Diagramm des Schaltvorgangs gemäß der Erfindung für eine Schaltung im Gefälle mit Motorbremse.

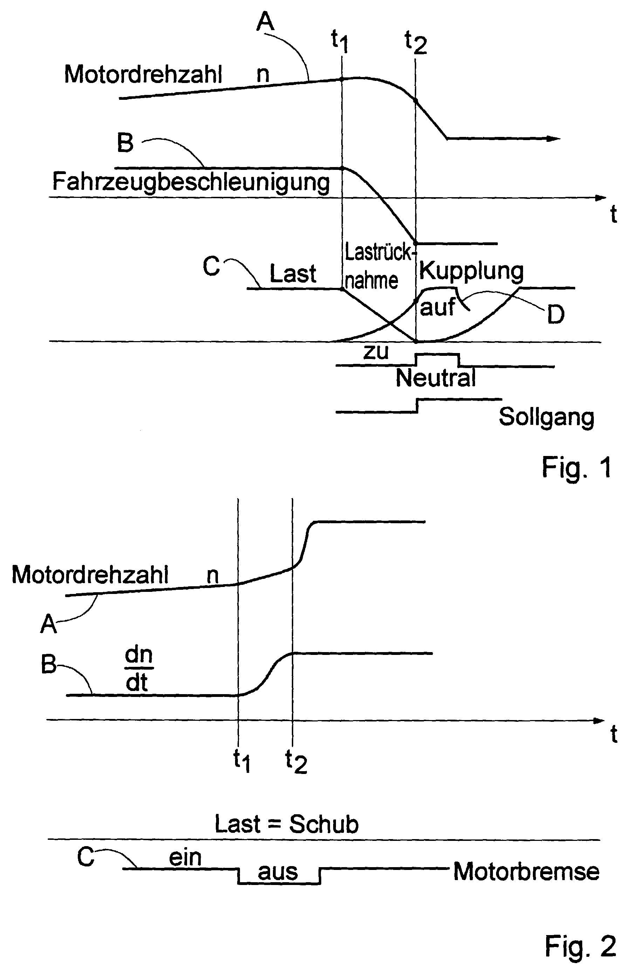

In Fig 1 stellt die obere Kurve A den zeitlichen Verlauf der Motordrehzahl n1 in Abhängigkeit von der Zeit t dar. Die untere Kurve B stellt den zeitlichen Verlauf der Ableitung der Motordrehzahl (die Änderung der Motordrehzahl) dn/dt in Abhängigkeit von der Zeit t dar.

Die Kurve C beschreibt den zeitlichen Verlauf des Lastzustandes und die Kurve D den zeitlichen Verlauf des Zustandes der Kupplung (auf/zu). Der Einfachheit halber werden in diesem Fall zwei Zeitpunkte t1 und t2 betrachtet.

Betrachtet wird der Wert von dn_t2/dt : Ist dn_t2/dt negativ und gilt dn_t2/dt < dn_t1/dt, so wird auf Steigung geschlossen, deren Ausmaß durch dn_t2/dt - Betrag (dn_t1/dt) gegeben ist. Analog wird auf Ebene bzw. leichtes Gefälle geschlossen, wenn dn_t2/dt schwach negativ bzw. positiv ist.

Erfindungsgemäß wird zum Zeitpunkt t1 die Lastrücknahme eingeleitet, wobei die Kupplung geöffnet wird und als Zielgang "Neutral" vorgegeben wird. Zum Zeitpunkt t2 ist die Kupplung vollständig bzw. fast vollständig geöffnet, so dass der Wert dn_t2/dt, wie oben erläutert, ausgewertet werden kann.

Anschliessend wird diese Auswertung für die Auswahl des Soll-Ganges berücksichtigt.

Fig. 2 zeigt exemplarisch den Schaltvorgang gemäß der Erfindung für eine Schaltung im Gefälle mit Motorbremse. Zum Zeitpunkt t1 wird auf "Neutral" geschaltet während bei t2 die Soll-Gang-Vorgabe erfolgt.

Analog zum bereits erläuterten Beispiel aus Fig. 1 wird dn_t2/dt erfasst und mit dn t1/dt verglichen. Wenn dn_t2/dt > dn_t1/dt, dann wird ein Gefälle erkannt, wobei die betragsbehaftete Differenz zwischen dn_t1/dt und dn_t2/dt das Ausmaß des Gefälles anzeigt.

Auch in diesem Fall wird diese Auswertung für die Auswahl des Soll-Ganges berücksichtigt, wie bereits erläutert.

## Patentansprüche

1. Verfahren zur Gangwahl für Stufenwechselgetriebe eines Kraftfahrzeugs, dadurch **gekennzeichnet,**
dass die Entscheidung über den Zielgang derart verschoben wird, dass sich Steigungs- oder Gefälleausmaß proportional zur Verzögerung bzw. Beschleunigung des Fahrzeugs zuordnen lassen.

2. Verfahren nach Anspruch 1, dadurch **gekennzeichnet,** dass nach dem Ableiten des Schaltzeitpunktes und der Schaltrichtung aus dem Ist-Gang und der dem Lastgrad zugehörigen Beschleunigung als Zielgang "Neutral" vorgegeben wird und dass die momentane Beschleunigung bzw. Verzögerung des antriebskraftfreien Kraftfahrzeugs erfasst und für die Auswahl des Soll-Ganges berücksichtigt wird.

3. Verfahren nach einem der vorangehenden Ansprüche, dadurch **gekennzeichnet,** dass die Auswahl des Soll-Gangs ab einen Restwert der laufenden Lastrücknahme vorgenommen wird.

4. Verfahren nach einem der Ansprüche 1 bis 2, dadurch **gekennzeichnet,** dass die Auswahl des Soll-Gangs ab einem vorgegebenen Öffnungsgrad der Kupplung vorgenommen wird.

5. Verfahren nach einem der vorangehenden Ansprüche, dadurch **gekennzeichnet,** dass es als übergeordnetes Entscheidungskriterium bei Grenzwertüberschreitungen der Fahrzeugverzögerung im antriebsfreien Zustand zur Korrektur der Entscheidung einer beliebigen Fahrstrategie eingesetzt wird.
